(19) Europäisches Patentamt

European Patent Office

Office européen des brevets

(11)  EP 0 995 894 B1

(12)  EUROPÄISCHE PATENTSCHRIFT

(45) Veröffentlichungstag und Bekanntmachung des Hinweises auf die Patenterteilung:
04.12.2002  Patentblatt 2002/49

(51) Int Cl.⁷: **F02M 31/06**

(21) Anmeldenummer: 99120769.7

(22) Anmeldetag: 20.10.1999

(54) **Verfahren und Vorrichtung zur Erzeugung eines Fluidstroms aus einem kalten und einem warmen Teilstrom**

Method and device for creating a fluid stream composed of a cold and a warm substream

Procédé et dispositif pour créer un écoulement de fluide composé d'écoulements de fluide froid et chaud

(84) Benannte Vertragsstaaten:
**DE ES FR GB IT SE**

(30) Priorität: **21.10.1998  DE 19848443**

(43) Veröffentlichungstag der Anmeldung:
**26.04.2000  Patentblatt 2000/17**

(73) Patentinhaber: **Filterwerk Mann & Hummel GmbH**
**71638 Ludwigsburg (DE)**

(72) Erfinder: **Füsser, Rolf**
**76332 Bad Herrenalb (DE)**

(74) Vertreter: **Voth, Gerhard, Dipl.-Ing.**
**FILTERWERK MANN + HUMMEL GMBH**
**Postfach 4 09**
**71631 Ludwigsburg (DE)**

(56) Entgegenhaltungen:
EP-A- 0 196 058     EP-A- 0 624 836
EP-A- 0 809 013     DE-A- 3 402 559
DE-A- 3 604 692     DE-A- 3 729 441
FR-A- 2 437 498     US-A- 5 046 473

• PATENT ABSTRACTS OF JAPAN vol. 009, no. 116 (P-357), 21. Mai 1985 (1985-05-21) & JP 60 003723 A (MATSUSHITA DENKI SANGYO KK), 10. Januar 1985 (1985-01-10)

**Beschreibung**

Stand der Technik

Die Erfindung betrifft ein Verfahren sowie eine zur Durchführung dieses Verfahrens geeignete Vorrichtung zur Erzeugung eines Ansaugluftstroms mit einer gewünschten Mischtemperatur aus jeweils einem kalten und einem warmen Luftstrom nach der Gattung des Patentanspruches 1.

Derartige Vorrichtungen werden z. B. im Ansaugtrakt einer Brennkraftmaschine verwendet. Die Luftfilter im Ansaugtrakt können auf der Zustromseite mit einem Mischstromkasten ausgestattet werden, der mit Hilfe einer Stellklappe in der Lage ist, aus einem Kaltluft- und einem Warmluftstrom einen Mischluftstrom mit gewünschter Zwischentemperatur zu erzeugen. Die Wärmequelle ist in der Regel eine Blechhutze am heißen Abgaskrümmer des Verbrennungsmotors, durch die die Warmluft angesaugt wird.

Die Bereitstellung von Verbrennungsluft einer bestimmten Temperatur hat mehrere Gründe. Zum einen kann bei geringen Außentemperaturen eine Eisbildung im Ansaugsystem verhindert werden, welche die Funktion des Motors einschränken würde. Außerdem kann durch die Ansaugung von Warmluft die Warmlaufphase des Motors abgekürzt werden. Hierdurch erreicht dieser schneller seine Betriebstemperatur, was den günstigsten Motorverschleiß sowie die besten Emisonswerte für das Abgas der Brennkraftmaschine bewirkt. Aber auch bei warmgelaufenen Motor kann die Bereitstellung von Luft mit einer bestimmten Temperatur zur Optimierung des Verbrennungsablaufes beitragen.

Eine Vorrichtung zur Steuerung der Temperatur der Ansaugluft von Brennkraftmaschinen ist gemäß der EP 0 196 058 vorgeschlagen. Diese Vorrichtung ist in einem extra Gehäuse eines Ansaugtraktes integriert, wobei die Steuerung der Mischung der beiden Fluidströme hier rein mechanisch realisiert ist. Die Steuerung einer Mischklappe, welche für die Einstellung eines bestimmten Fluidgemisches zuständig ist, wird durch die thermisch bedingte Längenänderung zweier Stößel zweier Wachssonden realisiert. Eine Temperaturänderung der Kaltluft ergibt eine Freigabe von elastischen Haltemitteln einer Klappe und eine Erhöhung der Warmtemperatur ergibt über eine Auslenkung eines Stößels einer Sonde eine direkte Öffnung der Mischklappe. Zur Steuerung finden also Kalt- bzw. Mischtemperatur Beachtung.

Hier ergeben sich Nachteile in der Geschwindigkeit sowie auch in der Zuverlässigkeit dieses Systems. Die verwendeten Wachselemente können nur so schnell reagieren wie sich das in diesen Elementen befindliche Wachs erwärmt und ausdehnt. Durch den zeitlichen Verzug in der Steuerung, welche zwangsläufig durch das langsame Ansprechverhalten der Wachselemente entsteht, ergibt sich als weiterer Nachteil auch eine Ungenauigkeit in der Temperaturbewertung. Dieses System fährt den aktuell herrschenden Temperaturen zeitlich hinterher und kann so auf kurzfristige Temperaturänderungen nur schlecht reagieren.

Eine weitere Vorrichtung zur Regelung der Temperatur der Ansaugluft von Brennkraftmaschinen ist gemäß der DE 34 02 559 A1 vorgeschlagen. Diese Vorrichtung kann z. B. in ein Luftfiltergehäuse integriert sein (vergleiche Figur 1 dieses Dokuments), wobei der Regelkreis zur Beeinflussung des Stellgliedes in Gestalt einer Mischklappe 23 folgende Bestandteile aufweist. Von der Klappe 23 bis zu einem Temperaturfühler 50 bildet das Luftfiltergehäuse eine Regelstrecke, wobei der Temperaturfühler 50 mit einem Messwertumwandler 53 verbunden ist, der Stellsignale an eine Stellmechanik liefert. Diese kann z. B. aus einem Gleichstrommotor oder einer Unterdruckdose bestehen.

Eine Regelung dieser Art benötigt keine zusätzliche Erfassung von Störgrößen, da diese über die Abweichung der Regelgröße Mischlufttemperatur vom Sollwert erfaßt werden. Nachteilig wirkt sich die von dem verwendeten P-Regler verursachte Regelabweichung aus, die nicht etwa durch eine größere Regelkreisempfindlichkeit vermindert werden kann, da eine übertriebene Empfindlichkeit zu starkem Regelschwingen führt. Besonders im Niederlastbereich kann es bis hinunter zum Leerlauf infolge einer extrem großen Totzeit der Regelstrecke zu großen Schwingausschlägen kommen. Diese gefährden die Erreichung der bereits beschriebenen Ziele, die mit der Steuerung erreicht werden sollen.

Die bezüglich des Ansaugtraktes einer Brennkraftmaschine aufgezeigten Probleme gelten selbstverständlich ganz allgemein für jede Mischung zweier Fluidströme zu einem Mischfluidstrom, der eine gewünschte Temperatur aufweisen soll.

Die Aufgabe der Erfindung besteht daher darin, ein Verfahren zur Erzeugung eines Ansaugluftstroms einer Brennkraftmaschine mit einer gewünschten Mischtemperatur aus zwei Luftströmen mit jeweils einer Kalttemperatur und einer Warmtemperatur bzw. eine Vorrichtung zur Durchführung dieses Verfahrens zu schaffen, welches auf eine Veränderung der wesentlichen Einflussparameter dieses Systems schnell und zuverlässig reagiert. Diese Aufgabe wird durch die Merkmale des Patentanspruches 1 gelöst. Ferner wird gemäß Anspruch 8 eine Vorrichtung zur Durchführung des Verfahrens gemäß Anspruch 1 beansprucht.

Vorteile der Erfindung

Das erfindungsgemäße Verfahren ist dazu geeignet, einen Fluidstrom mit einer gewünschten Mischtemperatur zu erzeugen. Hierzu werden zumindest zwei Teilfluidströme mit einer Kalttemperatur $t_k$ und einer Warmtemperatur $t_w$ verwertet. Selbstverständlich ist es auch möglich, mehr als zwei Fluidteilströme zur Erzeugung des Fluidstroms mit den gewünschten Mischtemperaturen heranzuziehen. Die Grenzen für die Temperatur des erzeugten Fluidstroms hängen in jedem Falle jeweils von dem Teilfluidstrom mit der kältesten bzw. mit der wärmsten Temperatur ab.

Gekennzeichnet ist das Verfahren durch die Verwendung einer Steuerung, die mit einer Stelleinrichtung kommuniziert. Die Stelleinrichtung umfaßt alle zur Erzeugung des Fluidstroms mit der gewünschten Mischtemperatur notwendigen Bauteile. Insbesondere ist hierfür ein Stellglied notwendig, welches z. B. aus einer Klappe bestehen kann. Diese Klappe vermag in Abhängigkeit von ihrer Stellung die Fluidteilströme in verschiedenem Verhältnis zueinander zu vermischen. Weiterhin ist unter dem Stellsystem der Teil der Kanalstruktur zu verstehen, welcher das Stellglied aufnimmt. Außerdem ist ein Antrieb für das Stellglied notwendig, welcher z. B. aus einem Elektromotor oder einem pneumomechanischen Wandler bestehen kann.

Zur Erreichung eines befriedigenden Ergebnisses hinsichtlich der Mischtemperatur $t_m$ müssen bei dem Verfahren auf jeden Fall auch die Gegebenheiten der Stelleinrichtung als Funktionsgröße beachtet werden. Hiermit ist in erster Linie der Wärmeverlust gemeint, der an der Stelleinrichtung bis zu der Stelle, an der das mit der Mischtemperatur versehene Fluid genutzt wird, auftritt. Weiterhin werden als Störgrößen zumindest die Kalttemperatur $t_k$ und die Warmtemperatur $t_w$ der beiden Fluidteilströme betrachtet. Die Steuerung ermittelt aus den gegebenen Werten eine Stellgröße, die zur Schaltung des Stellgliedes herangezogen wird.

Im Gegensatz zu bekannten Lösungen verwendet das beschriebene Verfahren also keine Regelung zur Ermittlung der Klappenstellung, sondern eine Steuerung. Zwar benötigen Steuerungen grundsätzlich die Erfassung aller wesentlichen Störgrößen, was im allgemeinen eine Unzahl von Sensoren zur Folge haben kann, im vorliegenden Fall des Ansaugtraktes ist es aber günstiger. Es hat sich nämlich gezeigt, daß die in Frage kommenden Störgrößen in einem modernen Pkw alle schon aus anderen Gründen direkt oder indirekt erfaßt werden und auf einige Störgrößen reduziert werden können.

Wird das Verfahren gemäß einer sinnvollen Ausgestaltung des Erfindungsgedankens nämlich für den Ansaugluftstrom einer Brennkraftmaschine genutzt, so lassen sich durch Erfassung folgender drei wesentlicher Störgrößen bereits befriedigende Ergebnisse hinsichtlich der Warmluftregelung erreichen. Die Temperatur der Kaltluft $t_k$ wird direkt im Fahrzeug erfaßt. Für die Warmtemperatur $t_w$ wird als Maß die Wärmeleistung der Wärmequelle herangezogen. Im allgemeinen wird als Wärmequelle der Abgaskrümmer des Auspuffrohres an der Brennkraftmaschine benutzt. Die Ansaugöffnung für die Warmluft wird in diesem Bereich angebracht, so daß die durch die anbestrahlte Wärme des Auspuffkrümmers erwärmte Luft im Motorraum angesaugt wird. Die Wärmeleistung des Abgaskrümmers läßt sich aus der aktuellen Motorleistung ermitteln. Das Ergebnis der rechnerischen Ermittlung liegt dann als Temperatur $t_w$ der Luft im Warmkanal vor. Aller Erfahrung nach steigt $t_w$ aber nicht direkt proportional mit der Motorleistung P, da dem erhöhten Wärmeangebot ein erhöhter Bedarf, des höheren Luftvolumenstromes wegen, gegenübersteht. Der Zusammenhang ist ein eher degressiver, und kann in der Entwicklung durch Messungen bestimmt werden.

Zuletzt wird durch die Steuerung als weitere Störgröße die Fahrzeuggeschwindigkeit $v_F$ verarbeitet. Diese Störgröße läßt einen Rückschluß auf die Abkühlung des Systems zu. Eine Abkühlung kann erfolgen, während die Warmluft von der Wärmequelle zur Stelleinrichtung transportiert wird, und während die Mischluft zum Einsatzort, zu den zylinderseitigen Einlässen, transportiert wird.

Neben den variablen Aktualgrößen sind die systemeigenen Konstanten zu berücksichtigen. Hierbei sind zu nennen eine kennzeichnende Konstante des Kaltluftkanals $K_k$, die den Durchströmwiderstand des Warmluftkanals kennzeichnende Konstante $K_w$ und eine die Temperaturdifferenz mindernde Wärmeverlustkonstante $K_v$. Hieraus ergeben sich weitere Ausgestaltungen des erfinderischen Verfahrens, die im folgenden beschrieben werden. Als Stellglied wird bevorzugt eine Klappe verwendet, wodurch gemäß einer weiteren Ausgestaltung des Erfindungsgedankens die Stellgröße durch den Stellwinkel $\alpha$ der Klappe gegeben ist.

Unter Verwendung der beschriebenen Größen läßt sich das Steuerverfahren für die Klappe mit Hilfe mathematischer Zusammenhänge beschreiben, die in der Steuerungseinheit realisiert werden können. Die Steuereinheit verarbeitet somit die Temperatur der Kaltluft $t_k$, die aktuelle Motorleistung P sowie die aktuelle Fahrgeschwindigkeit $v_F$ und bestimmt damit die Klappenstellung. Um eine Solltemperatur $t_N$ am Nutzort zu erreichen, muß aus den bekannten Größen der erforderliche Stellwinkel $\alpha$, bzw. der Stellwinkelanteil $a=\alpha/\alpha_{voll}$ errechnet werden.

Im folgenden Hergang wird exemplarisch für ein typisches Warmluftmanagement zur Ottomotor-Anwendung die mathematische Funktion abgeleitet. Es soll gezeigt werden, daß das mathematische Modell zur Bestimmung des Stellwinkelanteiles aus einfachen Funktionen aufgebaut werden kann. Eine darauf basierende Steuerung soll vorteilhafterweise mit einem elektrischen Aktuator ausgeführt werden, da die mathematische Modellumsetzung elektrisch am besten gelingt. Andere Aktuatoren können selbstverständlich auch verwandt werden.

Vorausgesetzt wird, daß die Strömungsquerschnitte im Klappenkastenbereich den zugehörigen Stellwinkelanteilen $a = \alpha/\alpha_{voll}$ proportional sind. Die maßeinheitsfreien Zahlen $K_k$ und $K_w$ geben die Durchströmwiderstände in Bezug auf den Widerstand des voll geöffneten Querschnitts des Klappenkastens an. Warm- und Kaltluftstrom bilden im Abstrombereich des Klappenkastens vereinigt den Gesamtstrom. Damit ergibt sich der Gesamtwiderstand $R_g$.

$$R_g = \frac{\left(K_w + \dfrac{1}{a}\right) * \left(K_k + \dfrac{1}{(1-a)}\right)}{K_w + \dfrac{1}{a} + K_k + \dfrac{1}{(1-a)}}$$

Das Verhältnis vom Gesamtwiderstand zum Teilwiderstand $R_w$ des Warmluft-Stromanteils ist:

$$\frac{R_g}{R_w} = \frac{K_k + \dfrac{1}{1-a}}{K_w + \dfrac{1}{a} + K_k + \dfrac{1}{1-a}} = \frac{a(1-a)K_k + a}{a(1-a)(K_w + K_k) + 1}$$

Dies ist zugleich das Verhältnis des Warmluft-Stromanteiles am Gesamtstrom und gehorcht auch dem Temperaturdifferenz-Verhältnis, wobei $t_m$ die Temperatur der Mischluft ist (gemittelter Wert).

$$\frac{t_m - t_k}{t_w - t_k} = \frac{\dot{V}_w}{\dot{V}_g} = \frac{R_g}{R_w} = \frac{a(1-a)K_k + a}{a(1-a)(K_w + K_k) + 1}$$

Auf dem Wege zum Nutzort erfährt der Mischstrom eine Abkühlung, der durch die bereits erwähnte Konstante $k_v$ ausgedrückt wird.

$$K_v = \frac{t_n - t_k}{t_m - t_k}$$

Daraus ergibt sich für die Temperatur der Mischluft.

$$t_m = \frac{t_n - t_k\,(1 - K_v)}{K_v}$$

Nach Einsetzung des Ausdruckes von $t_m$ in die Formel des Warmstromanteiles ergibt sich.

$$\frac{t_n - t_k}{(t_w - t_k)K_v} = \frac{\dot{V}_w}{\dot{V}_g} = \frac{R_g}{R_w} = \frac{a(1-a)K_k + a}{a(1-a)(K_w + K_k) + 1}$$

Damit ist das mathematische Modell geschlossen. Der Ausdruck ($t_w - t_k$) stellt die Leistung der Wärmequelle nach der durch den Fahrwind verursachten Verminderung dar. Natürlich muß für jeden Anwendungsfall der Zusammenhang gesondert gefunden werden. Durch entsprechende empirische Ermittlung der Konstanten kann die Steuerung an spezielle Anwendungsfälle angepaßt werden.

Ein besonders zuverlässiges Verfahren erhält man gemäß einer besonderen Ausgestaltung der Erfindung dadurch, daß die Nutztemperatur $t_n$ des Fluides bei verlassen der Stelleinrichtung festgestellt wird. Mit Hilfe dieses Wertes kann zusätzlich zu der Steuerung eine Regelung vorgenommen werden, die bei einer Abweichung vom gewünschten Wert die Steuerung in ihrer Charakteristik korrigieren kann. Hierdurch lassen sich die Vorteile einer Steuerung und einer Regelung kombinieren. Einerseits können die bereits beschriebenen Regelschwingungen vermieden werden, da das System auf Veränderungen in erster Linie mit Hilfe der Steuerung reagiert. Andrerseits können Abweichungen, die in der Modellbildung der Steuerung begründet sind, korrigiert werden. Es ist z. B. eine lernfähige Steuerung möglich, die die Konstanten der Steuerung nach und nach hinsichtlich eines optimalen Steuerungsergebnisses anpaßt. Auf diese Weise können auch Veränderungen des Systems z. B. aufgrund von Verschluß oder Verschmutzung Beachtung finden.

Eine Vorrichtung zur Durchführung des beschriebenen Verfahrens muß zumindest folgende Bauteile aufweisen. Ein erster Kanal mit einem Einlaß ist zur Leitung des kalten Fluids vorgesehen. Ein zweiter Kanal leitet das warme Fluid von einem Einlaß zur Stelleinrichtung. Die Stelleinrichtung weist einen von einem Aktuator angetriebenes Stellglied auf, wobei das Stellglied insbesondere eine Klappe ist und der Aktuator ein Elektromotor. An die Klappe schließt sich eine Mischstrecke mit einem Auslaß an, wobei am Auslaß die Nutztemperatur $t_n$ des Fluids vorliegt. Der Aktuator kommuniziert weiterhin mit einer Steuerung, die Schnittstellen für die notwendigen Störgrößen aufweist. in Abhängigkeit dieser Störgrößen wird damit die Stellung des Aktuators und somit auch des Stellgliedes bestimmt. Eine Vorrichtung mit den beschriebenen Elementen läßt sich mit vertretbaren Aufwand fertigen und weist die bereits beschriebenen Vorteile einer zuverlässigen Durchführung des Verfahrens auf.

Diese Vorrichtung kann gemäß einer sinnvollen Ausgestaltung der Erfindung an den Ansaugtrakt einer Brennkraftmaschine angepaßt werden. Der erste Kanal wird dabei von dem Rohluftstutzen gebildet, der in einen Bereich geführt wird, von wo kalte Ansaugluft angesogen werden kann. Der zweite Kanal wird durch einen Warmluftstutzen gebildet, dessen Einlaß in einem warmen Bereich der Brennkraftmaschine mündet. Hierzu eignet sich insbesondere der Bereich des Abgasrohrs. Dieses kann von einer Hülse ummantelt sein, die mit dem Einlaß des Warmluftstutzens kommuniziert. Dadurch wird eine zuverlässige Erwärmung der angesaugten Luft erreicht. Der Auslaß der Strecke mündet in einen Luftfilter. Dies bedeutet, daß die Nutztemperatur $t_n$ an dieser Stelle gemessen wird. Soll die Abkühlung im weiteren Verlauf der Ansaugvorrichtung bis zu den zylinderseitigen Einlässen einschließen, so kann die Nutztemperatur auch an dieser Stelle gemessen werden. Eine besonders wirtschaftliche Anpassung der erfindungsgemäßen Vorrichtung an den Ansaugtrakt der Brennkraftmaschine wird erreicht, wenn die Schnittstellen der Steuerung zumindest teilweise mit der Motorsteuerung der Brennkraftmaschine verbunden werden. Die Motorsteuerung kann dann die Meßwerte für die Fahrzeuggeschwindigkeit sowie die Außentemperatur zur Verfügung stellen, wodurch der Aufwand für zusätzliche Sensoren eingespart wird. Die Steuerung für die Vorrichtung kann selbstverständlich auch als Teil der Motorsteuerung ausgeführt sein.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.


Zeichnung


Weitere Einzelheiten der Erfindung werden in den Zeichnungen anhand von schematischen Ausführungsbeispielen beschrieben. Hierbei zeigen

Figur 1    den schematischen Aufbau einer Brennkraftmaschine mit Ansaugtrakt und Warmluftregulierung,

Figur 2    die Darstellung des Mischkastens gemäß Figur 1 zur Erklärung des Stellwinkelanteils a und

Figur 3    die Stellcharakteristik der Klappe für einen beispielhaften Anwendungsfall.


Beschreibung der Ausführungsbeispiele


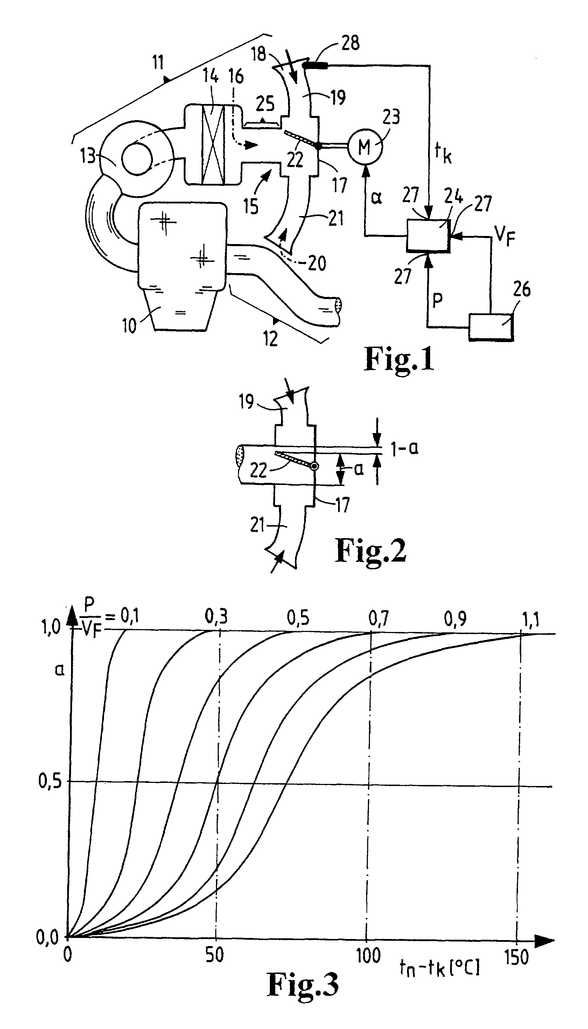

In Figur 1 ist die Vorrichtung zur Erzeugung der Mischtemperatur anhand des Anwendungsfalls im Ansaugtrakt einer Brennkraftmaschine schematisch dargestellt. Das System besteht aus einer Brennkraftmaschine 10, welche einen Ansaugtrakt 11 und ein Abgasrohr 12 aufweist. Der Ansaugtrakt weist ein Saugrohr 13 und einen Luftfilter 14 auf. Diesen Funktionselementen vorgeschaltet ist eine Stelleinrichtung 15, die mit einem Auslaß 16 am Luftfilter 14 angebracht ist. Die Stelleinrichtung weist weiterhin einen Mischkasten 17 auf, an den ein mit einem erstem Einlaß 18 versehener Rohluftstutzen 19 und ein mit einem zweiten Einlaß 20 versehener Warmluftstutzen 21 münden. Im Regelkasten ist weiterhin eine Klappe 22 als Stellglied angeordnet, welche durch einen Aktuator 23 angesteuert wird. Der Aktuator erhält von einer Steuerung 24 ein Steuersignal, mit dessen Hilfe der Aktuator den Stellwinkel $\alpha$ der Klappe einstellen kann. Von der Klappenstellung abhängig ist der Anteil an Warmund Kaltluft, wobei diese beiden Anteile in einer sich an den Mischkasten 17 anschließenden Mischstrecke 25 vermischt werden.

Zur Ermittlung der Klappenstellung $\alpha$ verwertet die Steuerung 24 ein Signal für die Motorleistung P und die Fahrzeuggeschwindigkeit $v_F$. Beide Signale werden über eine Motorsteuerung 26 ausgegeben und über Schnittstellen 27 der Steuerung zugeführt. Weiterhin wird der Steuerung ein von einem Temperatursensor 28 kommendes Signal für die Temperatur $t_K$ der Kaltluft zugeführt. Der Einlaß 18 des Rohluftstutzens ermöglicht die Ansaugung von Verbrennungsluft mit der Umgebungstemperatur $t_K$. Diese kann z. B. hinter dem Kühlergrill des Fahrzeugs oder auch im Radkasten angesaugt werden. Der Einlaß 20 des Warmluftstutzens 21 befindet sich im direkten Wirkungsbereich des Abgasrohrs 12 wodurch die von diesem abgestrahlte Wärme zur Erwärmung der Warmluft genutzt wird.

Die Figur 2 zeigt qualitativ den Zusammenhang des Stellwinkelanteils a der Klappe 13 im Mischkasten 17. Der volle Querschnitt der Mischstrecke ist auf eins normiert. Somit ergeben sich die Stellwinkelanteile des Rohluftstutzens sowie des Warmluftstutzens a und 1-a, die zusammen immer den Querschnitt der Mischstrecke ergeben.

Figur 3 zeigt eine typische Stellcharakteristik für den Stellwinkelanteil a bei unterschiedlichen Temperaturdifferenzen zwischen der Nutztemperatur $t_n$ und der Kaltlufttemperatur $t_k$. Je höher die Differenz wird, desto mehr warme Luft muß der Mischstrecke 25 zugeführt werden. Entsprechend Figur 2 wird deutlich, daß der der Stellwinkelanteil a in Folge dessen größer gewählt werden muß. Weiterhin wird deutlich, daß der Stellwinkelanteil bei gleicher Temperaturdifferenz auch abhängig vom Verhältnis der Motorleistung P und der Fahrgeschwindigkeit $v_F$ ist. Je größer die Motorleistung bzw. je kleiner die Fahrgeschwindigkeit, desto stärker die Wärmeentwicklung am Auspuffrohr, welches die Wärmequelle für die Warmluftansaugung darstellt.

Das Diagramm gemäß Figur 3 ist für ein Beispielfall erstellt worden, welcher das bereits beschriebene mathematische Modell nutzt. Im vorliegenden Fall waren die Konstanten $k_K=2$, $k_W=4$ und $K_v=0{,}75$. Bei der Messung der aktuellen Motorleistung P in $k_W$ und der Fahrzeuggeschwindigkeit $v_F$ in Km/h und den Temperaturen t in °C ergibt sich.

$$t_w - t_k = \frac{560\left(\dfrac{P}{v_F}\right)^{0,9}}{2 + a}$$

Daraus ergibt sich die Formel für die Berechnung der Nutztemperatur entsprechend dem Diagramm in Figur 3.

$$t_n = 0{,}75\,\frac{2a(1 - a) + a}{(2 + 4)a(1 - a) + 1} * \frac{560\left(\dfrac{P}{v_F}\right)^{0,9}}{2 + a} + t_k$$

Das Diagramm veranschaulicht den Zusammenhang. Im ausgeführten Praxisfall muß über die Größe $t_n$ der erforderliche Klappenwinkel $a\alpha$ voll bestimmt werden. Das kann durch Iteration mit kleinen Betragsschritten von a geschehen.

In ähnlicher Weise können auch anders gelagerte Fälle behandelt werden, bei der das zentrale Bauteil eine Steuerklappe in einem Mischkasten ist. Sowohl in der Regelstatik wie in der Regeldynamik ist das System dem herkömmlichen überlegen.

**Patentansprüche**

**1.** Verfahren zur Erzeugung eines Ansaugluftstromes mit einer gewünschten Mischtemperatur $t_m$ für eine Brennkraftmaschine in einem Fahrzeug aus zwei Fluidströmen, von denen einer eine Kalttemperatur $t_k$ und einer eine Warmtemperatur $t_w$ besitzt, mit Hilfe einer Stelleinrichtung (15), wobei die Mischtemperatur zwischen der Kalttemperatur und der Warmtemperatur liegt, wobei die Stelleinrichtung mit einer Steuerung (24) kommuniziert, welche in Abhängigkeit der Kalttemperatur $t_k$ und Warmtemperatur $t_w$ eine Stellgröße zur Bestimmung der Stellung eines als Teil der Stelleinrichtung ausgeführten Stellglieds, insbesondere einer Klappe (22), ermittelt, wobei die Stellgröße weiterhin unter Beachtung der Gegebenheiten der Stelleinrichtung (15) als Funktionsgröße ermittelt wird, **dadurch gekennzeichnet, dass**

- die Funkionsgröße zumindest durch den Wärmeverlust bestimmt ist, der an der Stelleinrichtung bis zu der Stelle auftritt, an der das mit der Mischtemperatur versehene Fluid genutzt wird und für den Wärmeverlust eine Wärmeverlustkonstante $K_v = (t_n - t_k)/(t_m - t_k)$ verwendet wird, wobei $t_n$ die Solltemperatur des Fluids am Nutzort ist.

**2.** Verfahren nach Anspruch 1, **dadurch gekennzeichnet, dass** die Steuerung als weitere Störgröße die Fahrzeuggeschwindigkeit ($v_F$) verarbeitet.

**3.** Verfahren nach Anspruch 1 oder 2, **dadurch gekennzeichnet, dass** dieses zur Erzeugung eines Ansaugluftstromes mit der gewünschten Mischtemperatur für eine Brennkraftmaschine (10) genutzt wird und die Steuerung als weitere Störgröße die Motorleistung (P) verarbeitet, die zumindest als Maß für die Warmtemperatur $t_w$ herangezogen wird.

**4.** Verfahren nach einem der vorherigen Ansprüche, **dadurch gekennzeichnet, dass** als Funktionsgrößen für die Stelleinrichtung zumindest je eine Konstante für den Strömungswiderstand der kalten Fluidströmung ($K_k$) und der warmen Fluidströmung ($K_w$) verwendet werden.

**5.** Verfahren nach einem der vorherigen Ansprüche, **dadurch gekennzeichnet, dass** die Stellgröße durch den Stellwinkel ($\alpha$) der Klappe (22) gegeben ist.

**6.** Verfahren nach einem der vorherigen Ansprüche, **dadurch gekennzeichnet, dass** zusätzlich zur Steuerung eine Regelung vorgesehen ist, die eine Nutztemperatur $t_n$ des Fluids bei Verlassen der Stelleinrichtung (15) feststellt, um bei einer Abweichung vom gewünschten Wert die Steuerung in Ihrer Charakteristik zu korrigieren.

**7.** Vorrichtung zur Durchführung eines Verfahrens im Ansaugtrakt (11) einer Brennkraftmaschine (10) gemäß einem den vorherigen Ansprüche, wobei diese

- einen ersten Kanal mit einem Einlaß (18) für das kalte Fluid,
- einen zweiten Kanal mit einem Einlaß (20) für das warme Fluid,
- eine Stelleinrichtung (15), die ein von einem Aktuator (23) angetriebenes Stellglied, insbesondere eine Klappe (22), und eine Mischstrecke (25) mit einem Auslaß (16) aufweist und
- eine Steuerung (24) zur Beachtung einer Funktionsgröße, die mit dem Aktuator (23) kommuniziert, und Schnittstellen (27) für die notwendigen Störgrößen aufweist, enthält,

**dadurch gekennzeichnet, dass** in der Steuerung zur Beachtung des Wärmeverlustes bis zum Nutzungsort mindestens eine Wärmeverlustkonstante $K_v$ hinterlegt ist.

**8.** Vorrichtung nach Anspruch 7, **dadurch gekennzeichnet, dass** dieses im Ansaugtrakt (11) einer Brennkraftmaschine (10) vorgesehen ist, wobei der erste Kanal durch einen Rohluftstutzen (19) und der zweite Kanal durch einen Warmluftstutzen (21), dessen Einlaß (20) in einen warmen Bereich der Brennkraftmaschine, insbesondere in der Nähe des Abgasrohrs (12), mündet, gebildet ist und der Auslaß (16) zu einem Luftfilter (14) führt.

**9.** Vorrichtung nach Anspruch 7 oder 8, **dadurch gekennzeichnet, dass** die Schnittstellen (27) zumindest teilweise mit einer Motorsteuerung (26) verbunden sind.

**Claims**

**1.** Method of producing a stream of intake air with a desired mixing temperature $t_m$ for an internal combustion engine in a vehicle from two streams of fluid, one of which has a cold temperature $t_k$, and one of which has a hot temperature $t_w$, by means of an adjusting device (15), the mixing temperature lying between the cold temperature and the hot temperature, the adjusting device communicating with a control means (24), which determines a standardising parameter in dependence on the cold temperature $t_k$ and hot temperature $t_w$ in order to determine the position of an adjusting member, more especially a flap (22), which is configured as part of the adjusting device, the standardising parameter also being determined as an operational parameter with regard to the specifications of the adjusting device (15), **characterised in that**

- the operational parameter is at least determined by the loss of heat which occurs at the adjusting device as far as the location where the fluid is utilised, which fluid is provided with the mixing temperature, and where a heat loss constant $K_v=(t_n-t_k)(t_m-t_k)$ is used for the heat loss, $t_n$ being the desired temperature of the fluid at the place of use.

**2.** Method according to claim 1, **characterised in that** the control means processes the vehicle speed ($V_F$) as an additional disturbance variable.

**3.** Method according to claim 1 or 2, **characterised in that** said method is utilised to produce a stream of intake air with the desired mixing temperature for an internal combustion engine (10), and the control means processes the engine performance (P) as an additional disturbance variable, which performance is used at least as a dimension for the hot temperature $t_w$.

4. Method according to one of the previous claims, **characterised in that** at least one respective constant for the flow resistance of the cold fluid flow ($K_k$) and at least one respective constant for the flow resistance of the hot fluid flow ($K_w$) are used as operational parameters for the adjusting device.

5. Method according to one of the previous claims, **characterised in that** the standardising parameter is provided by the adjustment angle ($\alpha$) of the flap (22).

6. Method according to one of the previous claims, **characterised in that**, in addition to the control means, a regulating means is provided, which establishes a useful temperature $t_n$ of the fluid on leaving the adjusting device (15), in order to correct the control means in respect of its characteristics if there is any deviation from the desired value.

7. Apparatus for accomplishing a method in the intake duct (11) of an internal combustion engine (10) according to one of the previous claims, said apparatus including

   - a first duct having an inlet (18) for the cold fluid,
   - a second duct having an inlet (20) for the hot fluid,
   - an adjusting device (15), which has an adjusting member, more especially a flap (22), which is driven by an actuator (23), and a mixing section (25) with an outlet (16), and
   - a control means (24) for noting an operational parameter, which communicates with the actuator (23), and interfaces (27) for the necessary disturbance variables,

   **characterised in that** at least one heat loss constant $K_v$ is input in the control means for noting the loss of heat as far as the place of use.

8. Apparatus according to claim 7, **characterised in that** said apparatus is provided in the intake duct (11) of an internal combustion engine (10), the first conduit being formed by an unfiltered air conduit (19), and the second conduit being formed by a hot air conduit (21), the inlet (20) of which terminates in a hot region of the internal combustion engine, more especially in the proximity of the exhaust pipe (12), and the outlet (16) extending to an air filter (14).

9. Apparatus according to claim 7 or 8, **characterised in that** at least some of the interfaces (27) are connected to an engine control means (26).


**Revendications**

1. Procédé pour générer une veine d'air d'aspiration à une température de mélange ($t_m$), souhaitée pour un moteur à combustion interne d'un véhicule, formée de deux veines de fluide dont l'une est à une température froide ($t_k$) et l'autre à une température chaude ($t_w$), à l'aide d'une installation de réglage (15), la température de mélange étant située entre la température froide et la température chaude,
   l'installation de réglage communiquant avec une commande (24) qui fournit une grandeur de réglage en fonction de la température froide ($t_k$) et de la température chaude ($t_w$) pour déterminer la position d'un organe de réglage faisant partie de l'installation de réglage notamment un volet (22), la grandeur de réglage se déterminant en outre en tenant compte des données relatives à l'installation de réglage (15) comme grandeur de fonctionnement,
   **caractérisée en ce que**
   la grandeur de fonctionnement est déterminée au moins par la déperdition calorifique produite sur l'installation de réglage jusqu'à l'endroit où on utilise le fluide à la température du mélange, et pour la déperdition calorifique, on utilise une constante de déperdition calorifique $K_v=(t_n-t_k)/(t_m-t_k)$, relation dans laquelle ($t_n$) est la température de consigne du fluide à l'endroit de son utilisation.

2. Procédé selon la revendication 1,
   **caractérisé en ce que**
   la commande traite la vitesse ($V_F$) du véhicule comme autre grandeur perturbatrice.

3. Procédé selon les revendications 1 ou 2,
   **caractérisé en ce qu'**

il est utilisé pour générer une veine d'air d'aspiration à la température de mélange souhaitée pour un moteur à combustion interne (10), et la commande traite comme autre grandeur perturbatrice la puissance (P) du moteur, utilisée au moins comme mesure de la température chaude ($t_w$).

4. Procédé selon l'une des revendications précédentes,
**caractérisé en ce que**
comme grandeur fonctionnelle pour l'installation de réglage, on utilise au moins chaque fois une constante pour la résistance aéraulique de la veine de fluide froid ($K_k$) et de la veine de fluide chaud ($K_w$).

5. Procédé selon l'une des revendications précédentes,
**caractérisé en ce que**
la grandeur de réglage est définie par l'angle d'actionnement ($\alpha$) du volet (22).

6. Procédé selon l'une des revendications précédentes,
**caractérisé en ce qu'**
en plus de la commande, il est prévu une régulation qui détermine une température utile ($t_n$) du fluide à la sortie de l'installation de réglage (15), pour qu'en cas de déviation par rapport à la valeur souhaitée, on corrige la caractéristique de la commande.

7. Dispositif pour la mise en oeuvre d'un procédé dans la tubulure d'admission (11) d'un moteur à combustion interne (10) selon l'une des revendications précédentes, comprenant :

- un premier canal avec une entrée (18) pour le fluide froid,
- un second canal avec une entrée (20) pour le fluide chaud,
- une installation de réglage (15) comportant un organe de réglage, notamment un volet (22), entraîné par un actionneur (23), un chemin de mélange (25) ayant une sortie (16), et
- une commande (24) qui tient compte des grandeurs fonctionnelles et qui communique avec l'actionneur (23), et des pointes d'interface (27) pour les grandeurs perturbatrices, nécessaires,

**caractérisé en ce que**
dans la commande pour tenir compte de déperdition calorifique jusqu'à l'endroit d'utilisation, on prévoit au moins une constante de déperdition calorifique ($K_v$).

8. Dispositif selon la revendication 7,
**caractérisé en ce qu'**
il est prévu dans la tubulure d'admission (11) d'un moteur à combustion interne (10), le premier canal étant formé par un ajutage du tube à air (19) et le second canal par un ajutage d'air chaud (21) dont l'entrée (20) débouche dans une zone chaude du moteur à combustion interne, notamment à proximité du tuyau d'échappement (12), et dont la sortie (16) conduit à un filtre à air (14).

9. Dispositif selon les revendications 7 ou 8,
**caractérisé en ce que**
les interfaces (27) sont au moins partiellement reliées à une commande de moteur (26).

**Fig.1**

**Fig.2**

**Fig.3**